# EUROPÄISCHE PATENTSCHRIFT

(11) **EP 2 334 549 B1**
(45) Veröffentlichungstag und Bekanntmachung des Hinweises auf die Patenterteilung: **20.06.2012**
(21) Anmeldenummer: 09783256.2
(22) Anmeldetag: 22.09.2009
(51) Int. Cl.: F03D 1/06, B64C 27/46

(54) **FLÜGEL FÜR EINE STRÖMUNGSMASCHINE**
BLADE FOR A TURBOMACHINE
PALE POUR TURBOMACHINE

(30) Priorität: 22.09.2008 AT 14772008
(43) Veröffentlichungstag der Anmeldung: 22.06.2011
(73) Patentinhaber: Enthammer, Walter, 5102 Anthering (AT)
(72) Erfinder: Enthammer, Walter, 5102 Anthering (AT)
(74) Vertreter: Flach, Dieter Rolf Paul
(86) Internationale Anmeldenummer: PCT/EP2009/062227
(87) Internationale Veröffentlichungsnummer: WO 2010/031871

(56) Entgegenhaltungen:
- EP-A1- 0 782 956
- DE-A1- 19 706 668
- DE-A1-102006 023 557
- JP-A- 2002 284 099
- US-A1- 2005 061 921

## Beschreibung

Die Erfindung betrifft einen Flügel für eine Strömungsmaschine, insbesondere für einen Rotor eines Hubschraubers, mit einem Hauptabschnitt, der zur Erzeugung einer Strömung im umgebenden Medium ausgebildet ist und der sich von einem Nabenabschnitt bis zu einem Flügelspitzenbereich erstreckt, wobei im Flügelspitzenbereich ein Endstück zur Beeinflussung der Wirbelbildung an der Flügelspitze vorgesehen ist.

Als Flügel im Sinne der Erfindung werden Bauteile verstanden, die grundsätzlich dazu ausgebildet sind, Strömungen eines Mediums zu beeinflussen. Insbesondere ist dabei an Flügel von Rotoren gedacht, wie etwa Propeller von Flugzeugen oder Rotoren von Hubschraubern. Die vorliegende Erfindung betrifft aber auch Strömungsmaschinen, die durch die Strömung angetrieben werden, wie beispielsweise Flügel von Windkraftanlagen oder allgemein von Turbinen.

Neben diesen rotierenden Bauteilen betrifft die Erfindung aber auch Flügel von Flugzeugen oder dergleichen.

Es ist bekannt, dass sich im Bereich der Flügelspitze eines solchen flügels bei der Umströmung Wirbel im betreffenden Medium ausbilden, die nicht nur den Wirkungsgrad der Vorrichtung beeinflussen, sondern auch zu einer Geräuschproblematik führen können. Insbesondere im Bereich von Hubschraubern ist die Frage des Betriebsgeräusches besonders wichtig.

Um die Lärmemission zu verringern, sind bereits verschiedene Maßnahmen im Bereich der Flügelspitze vorgeschlagen worden.

In der US 5,785,282 A wird eine spezielle gepfeilte Form der Flügelspitze mit zusätzlichen Strömungsleitflächen vorgeschlagen. Eine ähnlich Lösung ist in der EP 0 493 303 B beschrieben. Die US 6,260,809 B zeigt eine weitere spezielle Form der Flügelspitze zur Beeinflussung der Wirbelbildung. Ferner ist noch auf die WO 2004/067956 A zu verweisen, die eine Fülle von Maßnahmen zur Steigerung des Wirkungsgrades von Windkraftanlagen zeigt.

Den obigen Lösungen ist gemeinsam, dass sie relativ aufwändig sind und dennoch nur eine ungenügende Wirkung im Hinblick auf die Verminderung der Geräuschemission aufweisen. Weitere bekannte Lösungen mit ähnlichen Nachteilen sind in der GB 557 581 A oder der US 5,114,099 A beschrieben.

Ein weiterer wesentlicher Stand der Technik is durch DE 10 2006 023 557 A gegeben.

Aufgabe der vorliegenden Erfindung ist es, einen Flügel der oben genannten Art so weiterzubilden, dass bei möglichst einfachem Aufbau eine spürbare Reduktion der Wirbelbildung und damit der Geräuschemission erzielt wird. Dabei soll der Wirkungsgrad der Strömungsmaschine selbst nicht beeinträchtigt, möglichst aber noch gesteigert werden.

Erfindungsgemäß werden diese Aufgaben dadurch gelöst, dass das Endstück als gerundeter Strömungskörper ausgebildet ist, der mindestens eine Nut aufweist, die im Übergangsbereich zum Hauptabschnitt im Wesentlichen in Richtung der Flügelachse beginnt und sich zur stromabwärtigen Seite hin krümmt.

Im Sinne der vorliegenden Erfindung wird als Hauptabschnitt der Teil des Flügels bezeichnet, der durch seine besondere Profilierung den allergrößten Teil der Strömungsbeeinflussung leistet. An den Hauptabschnitt erstreckt sich an einem Ende ein Endbereich, der das freie Ende des Flügels definiert. Am gegenüberliegenden Ende ist der Nabenabschnitt angeordnet, der sich bei Rotoren im Bereich der Drehachse befindet. Im Fall eines Flügels eines Flächenflugzeuges wird als Nabenabschnitt der Abschnitt angesehen, der den Übergang zum Rumpf des Flugzeuges bildet.

Das Endstück ist in erfindungsgemäße Weise als gerundeter Strömungskörper ausgebildet, d.h., dass in einem Längsschnitt des Flügels ein sanfter Übergang von der Oberseite des Flügels gegeben ist, wobei sich das Endstück bis zu einer Umrisslinie stetig krümmt und von der Umrisslinie in stetiger Krümmung tangential in die Unterseite des Hauptabschnittes einmündet. Auch in der Ebene des Flügels selbst findet eine stetige Krümmung von der Flügelvorderseite bis zur Flügelhinterseite statt.

Wesentlich an der Erfindung ist, dass mindestens eine Nut im Endstück vorgesehen ist, die im Wesentlichen in Axialrichtung des Flügels beginnt und die im weiteren Verlauf zur Umfangslinie hin zur stromabwärtigen Seite hin gekrümmt ist. Durch diese Nut wird eine Beeinflussung der Strömung im Bereich der Flügelspitze bewirkt, die sich vorteilhaft auf Wirkungsgrad und Geräuschemission auswirkt.

Besonders günstig ist es, wenn die Nut an der Umrisslinie des Endstückes im Wesentlichen in Strömungsrichtung endet. Auf diese Weise wird ein besonders hoher Wirkungsgrad erzielt. Als Umrisslinie wird die Linie bezeichnet, die die maximale Erstreckung des Endstückes in der Ebene des Flügels in diesem Bereich definiert.

Besonders vorteilhaft ist es, wenn sich die Nut an der Umrisslinie des Endstückes mit einer entsprechenden Nut der gegenüberliegenden Profilseite vereinigt. Auf diese Weise wird eine durchlaufende Nut gebildet, die in der Draufsicht im Wesentlichen V-förmig ausgebildet ist und sich von einem Übergangsbereich zum Hauptabschnitt an der Flügeloberseite bis zu einem Übergangsbereich zum Hauptabschnitt an der Flügelunterseite hin durchgängig erstreckt. Diese Maßnahme hat sich als besonders wirksam herausgestellt.

Besonders günstig im Hinblick auf die Wirkung ist es weiters, wenn die Nut in Strömungsrichtung konvex ausgebildet ist. Dies bedeutet, dass die Krümmung zur stromabwärtigen Seite hin gerichtet ist.

Weiters ist es von besonderem Vorteil, wenn die Nut - beginnend vom Übergangsbereich - zunehmend tiefer und breiter wird. Auf diese Weise kann eine besonders hohe Verringerung der Geräuschbelastung erreicht werden.

Eine besonders begünstigte Ausführungsvariante der vorliegenden Erfindung sieht vor, dass mindestens drei Nuten hintereinander vorgesehen sind.

In der Folge wird die vorliegende Erfindung anhand der in den Figuren dargestellten Ausführungsbeispiele näher erläutert. Es zeigen:
- Fig. 1: schematisch einen Rotor eines nicht dargestellten Hubschraubers in einer Draufsicht;
- Fig. 2: ein Detail II des Rotors von Fig. 1;
- Fig. 3: einen Schnitt nach Linie III-III in Fig**.** 2;
- Fig. 4: eine Ansicht in Richtung des Pfeils IV in Fig. 2; und
- Fig. 5: eine alternative Ausführungsvariante der Erfindung.

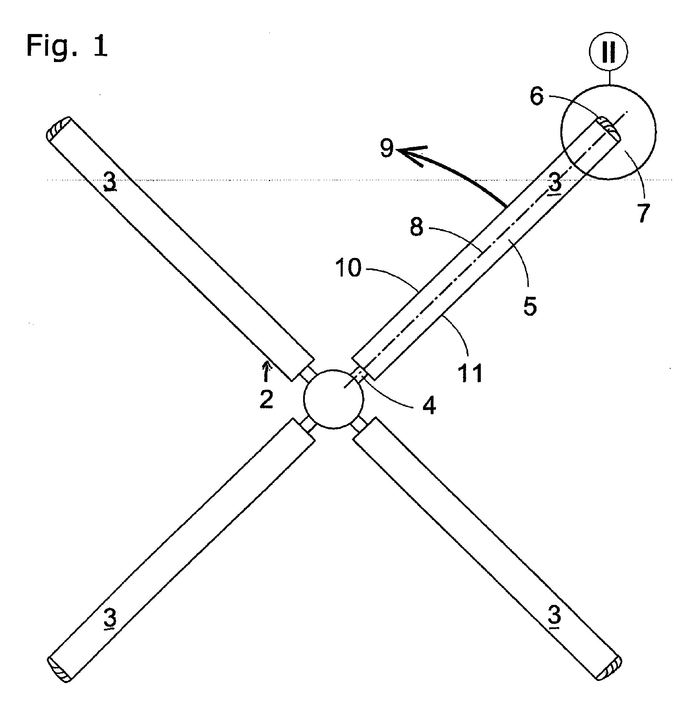

Der Rotor 2 von Fig. 1 besitzt vier Flügel 3. Jeder der Flügel 3 besitzt einen Nabenabschnitt 4, einen Hauptabschnitt 5 und ein Endstück 6 im Flügelspitzenbereich 7. Der Hauptabschnitt 5 ist länglich ausgebildet und erstreckt sich im Wesentlichen entlang der Flügelachse 8.

Die Drehrichtung des Rotors wird durch den Pfeil 9 angegeben, so dass der Flügel 3 eine stromaufwärtige Seite 10 und eine stromabwärtige Seite 11 aufweist.

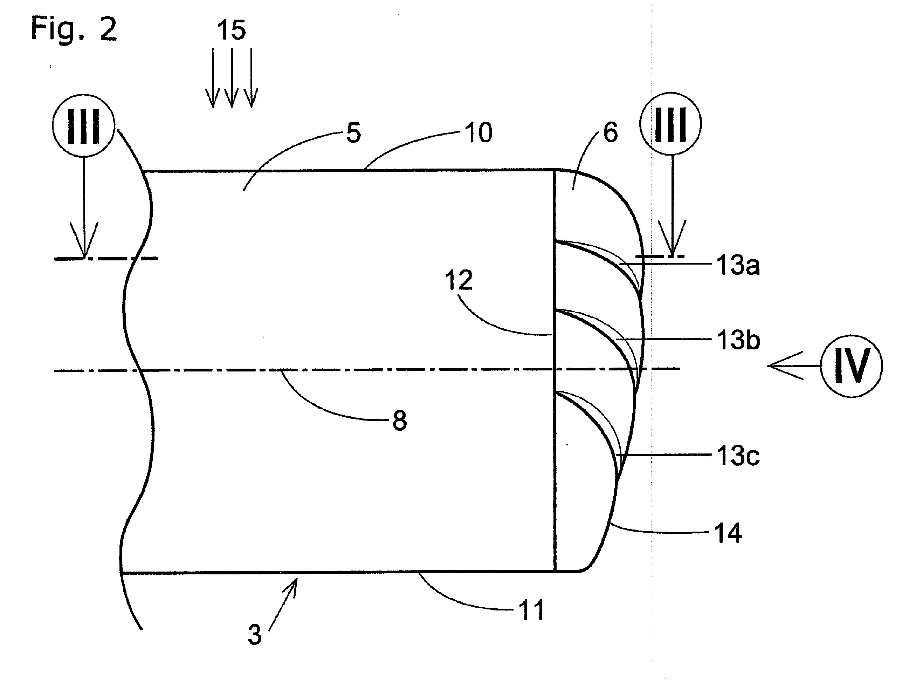

In Fig. 2 ist der Flügelspitzenbereich 7 in vergrößertem Maßstab dargestellt. Zwischen dem Hauptabschnitt 5 und dem Endstück 6 besteht ein Übergangsbereich 12, der durch eine entsprechende Konturlinie eingezeichnet ist.

An der in Fig. 2 sichtbaren Oberseite 17 des Flügels 3 besitzt das Endstück 6 drei Nuten 13a, 13b, 13c, die im Übergangsbereich 12 im Wesentlichen parallel zur Flügelachse 8 beginnen und sich in stetiger Krümmung zur Umrisslinie 14 hin erstrecken. Die Nuten 13a, 13b, 13c sind somit konvex zur stromaufwärtigen Seite 10 hin. Die Strömungsrichtung des umgebenden Mediums wird durch die Pfeile 15 in Fig. 2 gekennzeichnet.

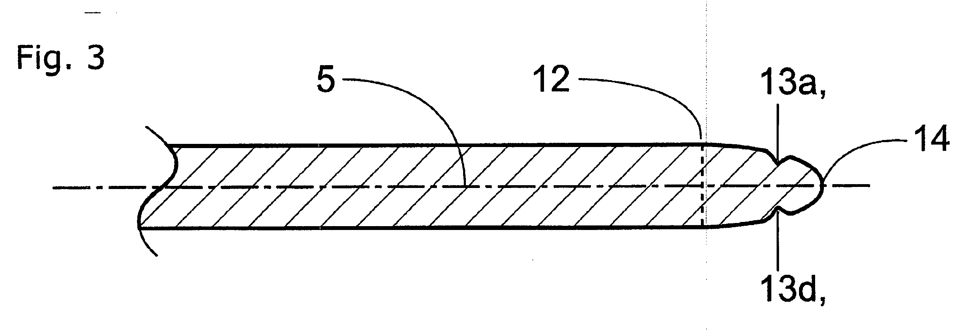

Aus Fig. 3 ist ersichtlich, dass die Breite des Endstückes 6 etwa 80% der Dicke beträgt, wobei die Dicke die größte Erstreckung des Flügels 3 im Übergangsbereich 12 quer zur Ebene 16 des Rotorblattes 3 ist.

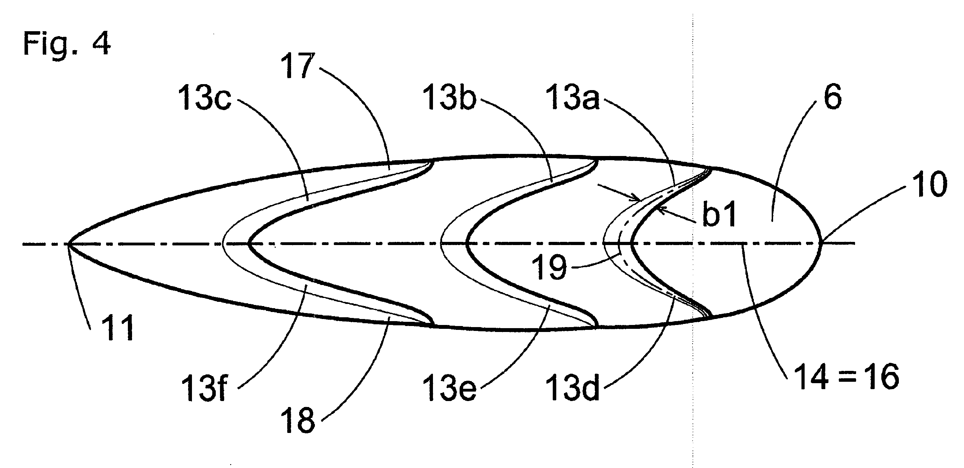

Fig. 4 ist zur Erleichterung des Verständnisses der Dickenabmessung übertrieben dargestellt. Es ist ersichtlich, dass das Endstück 6 in Bezug auf die Ebene 16 des Rotorblattes 3 symmetrisch ausgebildet ist. Die Nuten 13a, 13b, 13c an der Oberseite 17 gehen dabei im Bereich der Umrisslinie 14 in analoge Nuten 13d, 13e und 13f an der Unterseite 18 des Endstückes 6 über. Mit 19 ist exemplarisch die Mittellinie der Nut 13a gezeichnet, die zur stromaufwärtigen Seite 10 hin konvex ausgebildet ist und im Wesentlichen tangential in die Umrisslinie 14 übergeht. Weiters ist ersichtlich, dass die Breite b₁ der Nut 13a zur Umrisslinie 14 hin größer wird. Ebenso nimmt die hier nicht dargestellte Tiefe der Nut 13a zu.

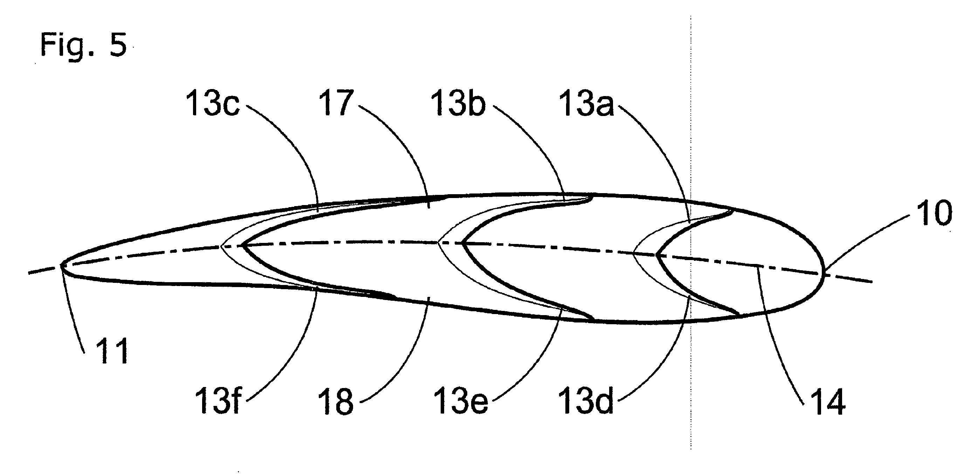

Die Ausführungsvariante von Fig. 5 zeigt einen Anwendungsfall, bei dem der Flügel 3 im Flügelspitzenbereich 7 nicht symmetrisch ausgebildet ist, sondern ein Flügelprofil aufweist.

Diese Übergangsbereiche zwischen den einander zugeordneten Nuten 13a, 13d; 13b, 13e; 13c, 13f sind strömungstechnisch optimiert und gerundet.

Die vorliegende Erfindung ermöglicht es, die Geräuschemissionen von Strömungsmaschinen wesentlich zu verringern.

## Patentansprüche

1. Flügel (3) für eine Strömungsmaschine, insbesondere für einen Rotor (2) eines Hubschraubers, mit einem Hauptabschnitt (5), der zur Erzeugung einer Strömung im umgebenden Medium ausgebildet ist und der sich von einem Nabenabschnitt (4) bis zu einem Flügelspitzenbereich (7) erstreckt, wobei im Flügelspitzenbereich ein Endstück (6) zur Beeinflussung der Wirbelbildung im Flügelspitzenbereich (7) vorgesehen ist, **dadurch gekennzeichnet, dass** das Endstück (6) als gerundeter Strömungskörper ausgebildet ist, der mindestens eine Nut (13a, 13b, 13c; 13d, 13e, 13f) aufweist, die in einem Übergangsbereich (12) zum Hauptabschnitt (5) im Wesentlichen in Richtung der Flügelachse (8) beginnt und sich zur stromabwärtigen Seite (11) des Flügels (3) hin krümmt.

2. Flügel (3) nach Anspruch 1, **dadurch gekennzeichnet, dass** die Nut (13a, 13b, 13c; 13d, 13e, 13f) an der Umrisslinie (14) des Endstücks (6) im Wesentlichen in Strömungsrichtung (15) endet.

3. Flügel (3) nach Anspruch 1 oder 2, **dadurch gekennzeichnet, dass** sich die Nut (13a, 13b, 13c) an der Umrisslinie (14) des Endstücks (6) mit einer entsprechenden Nut (13d, 13e, 13f) der gegenüberliegenden Profilseite vereinigt.

4. Flügel (3) nach einem der Ansprüche 1 bis 3, **dadurch gekennzeichnet, dass** die Nut (13a, 13b, 13c; 13d, 13e, 13f) in Strömungsrichtung (15) konvex ausgebildet ist.

5. Flügel (3) nach einem der Ansprüche 1 bis 4, **dadurch gekennzeichnet, dass** die Nut (13a, 13b, 13c; 13d, 13e, 13f) beginnend vom Übergangsbereich (12) zunehmend tiefer wird.

6. Flügel (3) nach einem der Ansprüche 1 bis 5, **dadurch gekennzeichnet, dass** die Nut (13a, 13b, 13c; 13d, 13e, 13f) beginnend vom Übergangsbereich (12) zunehmend breiter wird.

7. Flügel (3) nach einem der Ansprüche 1 bis 6, **dadurch gekennzeichnet, dass** mindestens drei Nuten (13a, 13b, 13c; 13d, 13e, 13f) hintereinander vorgesehen sind.

8. Flügel (3) nach einem der Ansprüche 1 bis 7, **dadurch gekennzeichnet, dass** das Endstück (6) in Bezug auf die Ebene (16) des Rotorblatts (3) asymmetrisch ausgebildet ist.

## Claims

1. Blade (3) for a turbomachine, in particular for a rotor (2) of a helicopter, comprising a main portion (5) which is formed so as to create a flow in the surrounding medium and which extends from a hub portion (4) to a blade tip region (7), an end piece (6) for influencing eddy formation being provided in the blade tip region (7), **characterised in that** the end piece (6) is formed as a rounded flow body comprising at least one groove (13a, 13b, 13c; 13d, 13e, 13f), which starts substantially in the direction of the blade axis (8), in a transition region (12) into the main portion (5), and curves towards the trailing edge (11) of the blade (3).

2. Blade (3) according to claim 1, **characterised in that** the groove (13a, 13b, 13c; 13d, 13e, 13f) ends substantially in the flow direction (15) at the outline (14) of the end piece (6).

3. Blade (3) according to either claim 1 or claim 2, **characterised in that** the groove (13a, 13b, 13c) joins a corresponding groove (13d, 13e, 13f) on the opposite profile side at the outline (14) of the end piece (6).

4. Blade (3) according to any one of claims 1 to 3, **characterised in that** the groove (13a, 13b, 13c; 13d, 13e, 13f) is convex in form in the flow direction (15).

5. Blade (3) according to any one of claims 1 to 4, **characterised in that** the groove (13a, 13b, 13c; 13d, 13e, 13f) becomes increasingly deep starting from the transition region (12).

6. Blade (3) according to any one of claims 1 to 5, **characterised in that** the groove (13a, 13b, 13c; 13d, 13e, 13f) becomes increasingly wide starting from the transition region (12).

7. Blade (3) according to any one of claims 1 to 6, **characterised in that** at least three grooves (13a, 13b, 13c; 13d, 13e, 13f) are provided in succession.

8. Blade (3) according to any one of claims 1 to 7, **characterised in that** the end piece (6) is formed asymmetrically about the plane (16) of the rotor blade (3).

## Revendications

1. Pale (3) pour une turbomachine, en particulier pour un rotor (2) d'un hélicoptère, comportant un tronçon principal (5) qui est réalisé pour engendrer un écoulement dans un milieu environnant et qui s'étend depuis un tronçon de moyeu (4) jusqu'à une zone de pointe de pale (7), dans laquelle il est prévu dans la zone de la pointe de pale une pièce terminale (6) pour influencer la formation des tourbillons dans la zone de la pointe de pale (7),
**caractérisée en ce que** la pièce terminale (6) est réalisée comme un corps aérodynamique arrondi, qui présente au moins une gorge (13a, 13b, 13c ; 13d, 13e, 13 f) qui commence dans une zone de transition (12) vers le tronçon principal (5) essentiellement en direction de l'axe (8) de la pale et qui s'incurve vers le côté (11) de la pale (3) du côté aval vis-à-vis de l'écoulement.

2. Pale (3) selon la revendication 1, **caractérisée en ce que** la gorge (13a, 13b, 13c ; 13d, 13e, 13f) se termine au niveau de la ligne de contour (14) de la pièce terminale (6) essentiellement dans la direction d'écoulement (15).

3. Pale (3) selon la revendication 1 ou 2, **caractérisée en ce que** la gorge (13a, 13b, 13c) se réunit au niveau de la ligne de contour (14) de la pièce terminale (6) à une gorge correspondante (13d, 13e, 13f) du côté opposé du profil.

4. Pale (3) selon l'une des revendications 1 à 3, **caractérisée en ce que** la gorge (13a, 13b, 13c ; 13d, 13e, 13f) est réalisée convexe dans la direction d'écoulement (15).

5. Pale (3) selon l'une des revendications 1 à 4, **caractérisée en ce que** la gorge (13a, 13b, 13c ; 13d, 13e, 13f) devient de plus en plus profonde en commençant depuis la zone de transition (12).

6. Pale (3) selon l'une des revendications 1 à 5, **caractérisée en ce que** la gorge (13a, 13 b, 13c ; 13 d, 13e, 13f) devient de plus en plus large en commençant depuis la zone de transition (12).

7. Pale (3) selon l'une des revendications 1 à 6, **caractérisée en ce qu'**il est prévu au moins trois gorges (13a, 13b, 13c ; 13d, 13e, 13f) les unes derrière les autres.

8. Pale (3) selon l'une des revendications 1 à 7, **caractérisée en ce que** la pièce terminale (6) est réalisé asymétrique par référence au plan (16) de la pale de rotor (3).
